(19) Europäisches Patentamt
European Patent Office
Office européen des brevets

(11) **EP 3 113 492 A1**

(12) **EUROPEAN PATENT APPLICATION**

(43) Date of publication:
**04.01.2017 Bulletin 2017/01**

(51) Int Cl.:
***H04N 19/11*** (2014.01)   ***H04N 19/157*** (2014.01)
***H04N 19/176*** (2014.01)   ***H04N 19/593*** (2014.01)

(21) Application number: **15306049.6**

(22) Date of filing: **30.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **LE PENDU, Mikaël**
**35576 Cesson-Sévigné (FR)**
• **BOITARD, Ronan**
**35576 Cesson-Sévigné (FR)**
• **ALAIN, Martin**
**35576 Cesson-Sévigné (FR)**
• **THOREAU, Dominique**
**35576 Cesson-Sévigné (FR)**

(74) Representative: **Huchet, Anne**
**TECHNICOLOR**
**1-5, rue Jeanne d'Arc**
**92130 Issy-les-Moulineaux (FR)**

(54) **METHOD AND APPARATUS FOR DETERMINING PREDICTION OF CURRENT BLOCK OF ENHANCEMENT LAYER**

(57)    A method (700) for determining a prediction of a current block of an enhancement layer dedicated to a high dynamic range coding is provided. In the method, a coding mode capable of encoding the prediction of the current block is obtained (S705). Next, a first block of prediction including neighboring pixels of the collocated block is determined (S710), and a first intermediate patch of the low dynamic range is built (S715). Then, a second block of prediction including neighboring pixels of the current block is determined (S720, and a second intermediate patch of the high dynamic range is built (S725).

Then, a transfer function is determined (S730) to transform the first intermediate patch to the second intermediate patch in a transform domain, a patch is built (S735) by applying the transfer function to a transformed initial patch of the base layer in a transform domain and then applying an inverse transform to the resulting patch so as to return in a pixel domain and the prediction of the current block of the enhancement layer is obtained (S740) by extracting a block from the patch. The extracted block in the patch is collocated to the current block of the enhancement layer in the second intermediate patch.

Fig. 7

**Description**

FIELD OF THE INVENTION

The present disclosure relates to a method and an apparatus for determining a prediction of a current block of an enhancement layer.

BACKGROUND OF THE INVENTION

In a field of image processing, Tone Mapping Operators (which may be hereinafter called "TMO") are known. In imaging actual objects in a natural environment, the dynamic range of the actual objects is much higher than a dynamic range that imaging devices such as cameras can image or displays can display. In order to display the actual objects on such displays in a natural way, the TMO is used for converting a High Dynamic Range (which may be hereinafter called "HDR") image to a Low Dynamic Range (which may be hereinafter called "LDR") image while maintaining good visible conditions.

Generally speaking, the TMO is directly applied to the HDR signal so as to obtain an LDR image, and this image can be displayed on a classical LDR display. There is a wide variety of TMOs, and many of them are non-linear operators.

Regarding the art in relation to the LDR/HDR video compression, using a global TMO/iTMO (inverse Tone Mapping Operations) is proposed as one possibility as explained in Z. Mai, H. Mansour, R. Mantiuk, P. Nasiopoulos, R. Ward and W. Heidrich, "On-the-fly tone mapping for backward-compatible high dynamic range image/video compression," ISCAS, 2010.

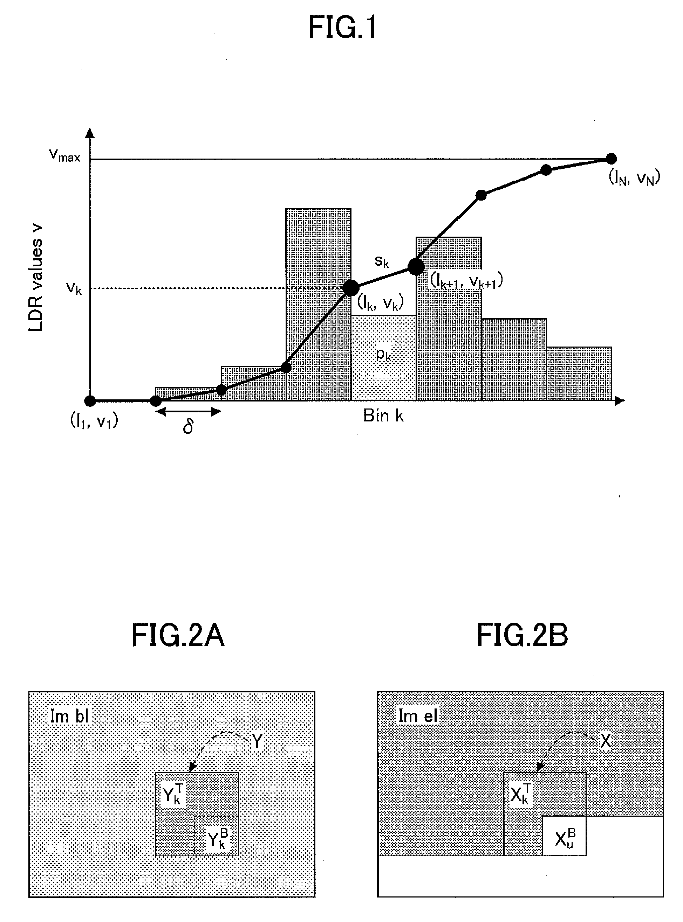

In this article, the distribution of the floating point data is taken into consideration for the minimization of the total quantization error. The algorithm is described by the following steps (the variables used here are illustrated in FIG. 1.)

Step 1: The logarithm of the luminance values is computed. Thus, for each pixel of luminance L, the following steps are based on the value $l=log_{10}(L)$. (1 is still in the floating point format.)

Step 2: A histogram of the 1 values is computed by taking a bin size fixed to $\delta=0,1$. For example, all the pixels in the image sequence can be used to build the histogram. Thus, for each bin $k$ $(k=1..N)$ the probability $p_k$ that a pixel belongs to this bin is known. The value $l_k = \delta.k$ is assigned to the bin.

Step 3: A slope value is computed for each bin K from a model described by the following formula (1):

$$s_k = \frac{v_{max} \cdot p_k^{1/3}}{\delta.\sum_{k=1}^{N} p_k^{1/3}} \qquad (1)$$

where $v_{max}$ is the maximum value of the considered integer representation ($v_{max} = 2^n-1$ if the data is quantized to n bit integers).

To avoid the risk of division by zero in the inversion equation (inverse tone mapping in 5.), if $s_k=0$, the $s_k$ can be set at a non-null minimum value $\varepsilon$ instead.

Step 4: Knowing the $N$ slope values, a global tone mapping curve can be defined. For each $k$ in [1,N], a floating point number $l$ that meets $l_k<l<=l_{k+1}$, is mapped to an integer value $v$ defined by the following formula (2):

$$v = (l - l_k).s_k + v_k \qquad (2)$$

where the values $v_k$ are defined from the values $s_k$ by $v_{k+1} = \delta.s_k + v_k$ (and $v_1=0$).

The value $v$ is then rounded to obtain an integer in the interval $[0, 2^n-1]$.

Step 5: In order to perform the inverse tone mapping, the parameters $s_k$ $(k=1..N)$ must be transmitted to the decoder. For a given pixel of value $v$ in the tone mapped image, firstly, the value $k$ that meets $v_k<=v<v_{k+1}$ must be found.

The inverse equation is then expressed as the following formula (3):

$$l_{dec} = l_k + \frac{(v-v_k)}{s_k} \qquad (3)$$

Here, the decoded pixel value is made $Ldec = 10^{ldec}$.

Moreover, in order to apply the inverse tone mapping (iTMO), the decoder must know the curve in FIG. 1.

The term "decoded" here corresponds to a de-quantization operation that is different from the term "decoded" of the video coder/decoder.

Another possibility is to use local tone mapping operators as disclosed in M. Grundland et al, "Non linear multiresolution blending", Machine Graphis & vision International Journal Volume 15 Issue 3 Feb 2006, and Zhe Wendy Wang ; Jiefu Zhai ; Tao Zhang ; Llach, Joan "Interactive tone mapping for High Dynamic Range video". ICASSP 2010. For example the TMO laplacian pyramid may be used based on the disclosure of Peter J. Burt Edward H. Adelson. "The Laplacian Pyramid as a compact image code," IEEE Transactions on Communications, vol. COM-31, no. 4, April 1983, Burt P.J., "The Pyramid as Structure for Efficient Computation. Multiresolution Image Processing and Analysis", Springer-Verlag, 6-35, and Zhai jiedu, Joan Llach, "Zone-based tone mapping" WO 2011/002505 A1. The efficiency of the TMO consists in the extraction of different intermediate LDR images from an HDR image where the intermediate LDR images correspond to different exposures. Thus, the over-exposed LDR image contains the fine details in the dark regions while the lighting regions (of the original HDR image) are saturated. In contrast, the under-exposed LDR image contains the fine details in the lighting zone while the dark regions are clipped.

Afterwards, each LDR image is decomposed in laplacian pyramid of n levels, while the highest level is dedicated to the lowest resolution, and the other levels provide the different spectral bands (of gradient). So, at this stage, each LDR image corresponds to a laplacian pyramid, and further we can notice that each LDR image can be rebuilt from its laplacian pyramid by using an inverse decomposition or "collapse", only if there is not a rounding miscalculation.

Finally, the tone mapping is implemented with the fusion of the different pyramid levels of the set of intermediate LDR images, and the resulting blended pyramid is collapsed so as to give the final LDR image.

In fact, the fusion of the gradients of the different spectral bands (or pyramid levels) is a non-linear process. The advantages of the type of algorithms reside on an efficient result of the tone mapping, but sometimes a lot of well-known rendering faults like halo artifacts are caused. The above references give more details on this technique.

Indeed, because this tone mapping is non-linear, it is difficult to implement the inverse tone mapping of the LDR so as to give an acceptable prediction to a current block of HDR layer in the case of SNR (Signal-to-Noise Ratio) or spatial video scalability.

Moreover, WO2010/018137 discloses a method for modifying a reference block of a reference image, a method for encoding or decoding a block of an image with help from a reference block and device therefore and a storage medium or signal carrying a block encoded with help from a modified reference B. In the prior art, a transfer function is estimated from neighboring mean values, and this function is used to correct an inter-image prediction. However, in WO2010/018137, the approach was limited to the mean value so as to give a first approximation of the current block and the collocated one.

## SUMMARY OF THE INVENTION

According to an embodiment of the present disclosure, there is provided a method for determining a prediction of a current block of an enhancement layer dedicated to a high dynamic range coding. In the method, a coding mode capable of encoding the error prediction of the current block is obtained from a collocated block of a base layer having a low dynamic range that is lower than the high dynamic range. The base layer is tone mapped by using a tone mapping operator dedicated to a low dynamic range video. Next, a first block of prediction including neighboring pixels of the collocated block is determined at a base layer level with the coding mode, and a first intermediate patch of the low dynamic range is built with the collocated block and the first block of prediction. Then, a second block of prediction including neighboring pixels of the current block is obtained at a high dynamic range layer level with the coding mode, and a second intermediate patch of the high dynamic range is built with the current block and the second block of prediction. Then, a transfer function is determined to transform the first intermediate patch to the second intermediate patch in a transform domain, a patch is built by applying the transfer function to a transformed initial patch of the base layer in a transform domain and then applying an inverse transform to the resulting patch so as to return in a pixel domain and the prediction of the current block of the enhancement layer is obtained by extracting a block from the patch. The extracted block in the patch is collocated to the current block of the enhancement layer in the second intermediate patch.

According to an embodiment of the present disclosure, there is provided an apparatus for determining a prediction of a current block of an enhancement layer dedicated to a high dynamic range coding. The apparatus includes a coding mode obtaining unit configured to obtain a coding mode capable of encoding the error prediction of the current block from a collocated block of a base layer having a low dynamic range that is lower than the high dynamic range. The base layer is tone mapped by using a tone mapping operator dedicated to a low dynamic range video. The apparatus further includes a first intermediate patch creation unit configured to determine a first block of prediction including neighboring pixels of the collocated block at a base layer level with the coding mode and to build a first intermediate patch of the low dynamic range with the collocated block and the first block of prediction, a second intermediate patch creation unit configured to determine a second block of prediction including neighboring pixels of the current block at a high dynamic range layer level with the coding mode and to build a second intermediate patch of the high dynamic range with the current block and the second block of prediction, and a unit to determine a transfer function to transform the first intermediate patch to the second intermediate patch in a transform domain, to build a patch by applying the transfer function to a transformed initial patch of the base layer in a transform domain and then applying an inverse transform to the resulting patch so as to return in a pixel domain and to obtain the prediction of the current block of the enhancement layer by extracting a block from the patch, the extracted block being in the patch collocated to the current block of the enhancement layer in the second intermediate patch.

Other objects, features, and advantages of the present disclosure will become more apparent from the following detailed description when read in conjunction with the accompanying drawings.

BRIEF DESCRIPTION OF THE DRAWINGS

FIG. 1 is a histogram of the floating point values $I=log_{10}(L)$ and its associated tone mapping curve based on the slopes $s_k$;

FIGs. 2A and 2B are an image of a reconstructed base layer and an image of a current block of an enhancement layer to be encoded;

FIGs. 3A through 3J are drawings illustrating an example of Intra 4x4 prediction specified in H.264 standards;

FIGs. 4A and 4B are block diagrams illustrating an apparatus for determining a prediction of a current block of an enhancement layer of the first embodiment and FIG. 4A is an encoder side and FIG. 4B is a decoder side;

FIGs. 5A and 5B are block diagrams illustrating a configuration of an apparatus for determining a prediction of a current block of an enhancement layer of a second embodiment of the present disclosure embodiment and FIG. 5A is an encoder side and FIG. 5B is a decoder side;

FIG. 6 is a block diagram illustrating a configuration of an apparatus for determining a prediction of a current block of an enhancement layer of a fourth embodiment of the present disclosure; and

Fig. 7 is a flow diagram illustrating an exemplary method for determining a prediction of a current block of an enhancement layer according to an embodiment of the present disclosure.

DETAILED DESCRIPTION OF THE EMBODIMENTS

A description is given below of embodiments of the present disclosure, with reference to the drawings.

The embodiments of the present disclosure aim to improve the processing of an inverse Tone Mapping Operations(which may be hereinafter called an "iTMO"), and the previous TMO used in a global or local (the non-linear) manner, obviously if the base layer signal is still usable.

The idea relates to, for example, an HDR SNR scalable video coding with a first tone mapped base layer $I_b$ using a given TMO dedicated to the LDR video encoding, and a second enhancement layer $I_e$ dedicated to the HDR video encoding. In this case (SNR scalability), for a current block be (to be encoded) of the enhancement layer, a block of prediction extracted from the base layer $b_b$ (the collocated block) should be found, and the block has to be processed by inverse tone mapping.

In order to implement the inverse tone mapping of the block $b_b$ , a function of transformation $T_{be}$ should be estimated to allow the pixels of the patch pb (composed of a virtual block $b_b'$ (homologous of $b_b$) and its neighbor) to be transformed to the current patch $p_e'$ (composed of a virtual block $b_e'$ (homologous of be) and its neighbor).

Once $T_{be}$ is determined, the function of transformation $T_{be}$ can be applied to the patch $p_b$ (composed of the block $b_b$ and its neighbor) giving the patch $p_b^T$, finally the last step resides on the extraction of the block $\tilde{b}_e$ collocated to the current block in the patch $p_b^T$. Here, the block $\tilde{b}_e$ corresponds to the prediction of the block $b_e$.

Here, it should be noted that before the estimation of the transformation $T_{be}$, the coding mode of the collocated block $b_b$ of the base layer is needed, or a mode of prediction is needed to be extracted from the reconstructed image (of the $I_b$) among the set of available coding modes (of the encoder of the enhancement layer) based on the base layer.

It is also important to notice that the entire processing steps explained above are also implemented at the decoder side as well as encoder side.

[Principle]

In order to illustrate an approach proposed in the embodiments of the present disclosure, an example based on SNR scalability is given below. In this case (SNR scalability), a block of prediction extracted from the base layer $b_b$ (the collocated block) should be found for a current block be (to be encoded) of the enhancement layer, and the block of prediction has to be processed by inverse tone mapping.

FIGs. 2A and 2B illustrate an image of a reconstructed base layer and an image of a current block to be encoded separately.

The notations illustrated in FIG. 2B, relative to the current image of the enhancement layer $I_e$ are as follows:

- The current block (unknown) to predict of the enhancement layer is: $X_u^B$

- The known reconstructed (or decoded) neighbor (or template) of the current block : $X_k^T$

- The current patch is :

$$X = \begin{bmatrix} X_k^T \\ X_u^B \end{bmatrix} \qquad (4)$$

- The index k and u indicate respectively «known» and «unknown».

The notations illustrated in FIG. 2A, relative to the image of the base layer $I_b$ are as follows:

- The collocated block (known) of the base layer, (that is effectively collocated to the current block to predict of the enhancement layer) is: $Y_k^B$

- The known reconstructed (or decoded) neighbor (or template) of the current block is : $Y_k^T$

- The collocated patch (collocated of X) is:

$$Y = \begin{bmatrix} Y_k^T \\ Y_k^B \end{bmatrix} \qquad (5)$$

The goal is to determine a block of prediction for the current block $X_u^B$ from the block $Y_k^B$. In fact, the transformation will be estimated between the patches Y and X, this transformation corresponding to a kind of inverse tone mapping.

Obviously, in the context of video compression, the block $X_u^B$ *is* not available (remember that the decoder will implement the same processing), but there are a lot of possible modes of prediction that could provide a first approximation (more precisely prediction) of the current block $X_u^B$. Here, the first approximation of the current block $X_u^B$ and its neighbor $X_k^T$ compose the intermediate patch X' of the patch X.

After that, the first approximation of the block $X_u^B$ is used so as to find a transformation function *Trf ($I_b \rightarrow I_e$)* which allows the intermediate patch of X to be transformed into the intermediate patch of Y (respectively noticed X' and Y'), and this transformation is finally applied to the initial patch Y allowing the definitive block of prediction to be provided.

[First Embodiment]

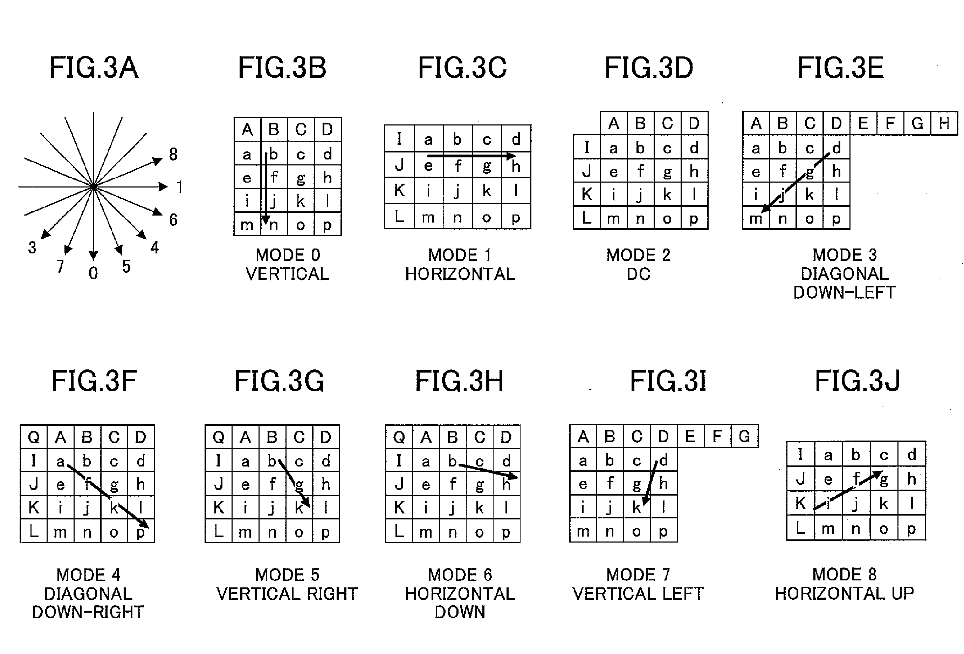

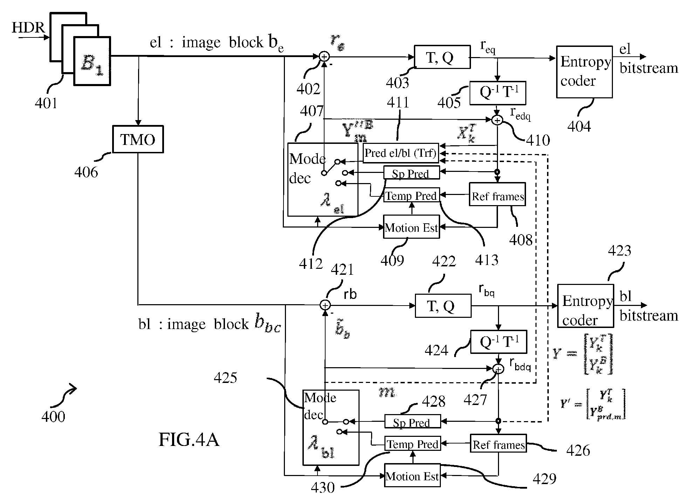

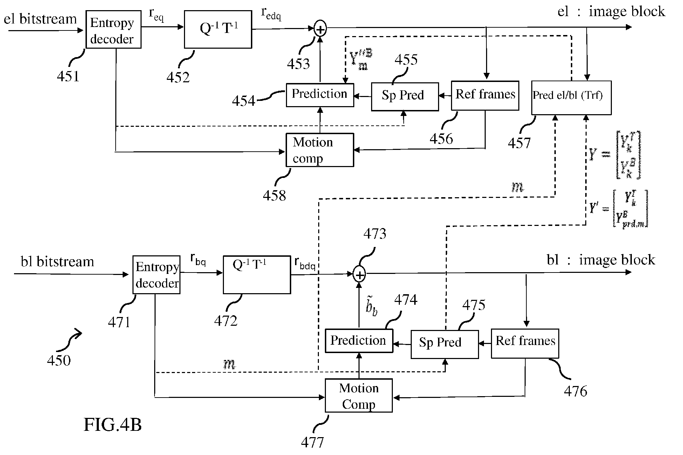

A description is given of a first embodiment of a method and an apparatus for determining a prediction of a current block of an enhancement layer, with reference to FIGs. 3A through 3J and 4.

More specifically, the first embodiment of the present disclosure is about the SNR scalability, that is to say, the same spatial resolution between the LDR base layer and the HDR enhancement layers. In addition, in the first embodiment, the collocated block $Y_k^B$ of the current block $X_u^B$ had been encoded with one of the intra coding modes of the coder of the enhancement layer, for example, the intra modes of H.264 standard defined in MPEG-4 AVC/H.264 and described in the document ISO/IEC 14496-10.

With the coding mode of index m of the block $Y_k^B$ and with the neighboring pixels of $Y_k^T$, it is possible to reconstruct the block of prediction $Y_{prd,m}^B$.

FIGs. 3A through 3J are drawings illustrating Intra 4x4 predictions specified in H.264 standards. As illustrated in FIGs. 3A through 3J, the N (here in case of H264 N=9) different intra mode predictions are offered in the H.264 standards.

In H.264, Intra 4x4 and Intra 8x8 predictions correspond to a spatial estimation of the pixels of the current block to be coded based on the neighboring reconstructed pixels. The H.264 standard specifies different directional prediction modes in order to elaborate the pixel prediction. Nine (9) intra prediction modes are defined on 4x4 and 8x8 block sizes of the macroblock (MB). As depicted in FIG.3, eight (8) of these modes consist of a 1D directional extrapolation of the pixels (from the left column and the top line) surrounding the current block to predict. The intra prediction mode 2 (DC mode) defines the predicted block pixels as the average of available surrounding pixels.

In the example of intra 4x4, the predictions are built as illustrated in FIG. 3A through 3J.

For example, as illustrated in FIG. 3C, in mode 1 (horizontal), the pixels e, f, g, and h are predicted with (left column) the reconstructed pixel J.

Moreover, as illustrated in FIG. 3G, in mode 5, as a first example, "a" is predicted by (Q+A+1)/2. Similarly, as a second example, "g" and "p" are predicted by (A+2B+C+2)/4.

Here, returning to the problem discussed above, it is preferable to build a prediction of the current block $X_u^B$, for the purpose of utilizing the same *m* index mode of prediction than one used in the base layer and the current neighbor $X_k^T$ that provide the block of prediction: $X_{prd,m}^B$.

Here, two intermediate patches X' and Y' can be composed as the following formulas (6) and (7).

The current intermediate patch X':

$$X' = \begin{bmatrix} X_k^T \\ X_{prd,m}^B \end{bmatrix} \qquad (6)$$

The intermediate patch Y' of the base layer: $Y' = \begin{bmatrix} Y_k^T \\ Y_{prd,m}^B \end{bmatrix}$ (7)

The desired transform *Trf* is computed between Y' and X', in a Transform Domain (TF), and the transformation could be Hadamard, Discrete Cosine Transform (DCT), Discrete Sine Transform (DST) or Fourier transform and the like. The following formulas (8) and (9) are provided.

$$T_{X'} = \text{TF} (X') \qquad (8)$$

$$T_{Y'} = \text{TF} (Y') \qquad (9)$$

The formula TF (Y') corresponds to the 2D transform "TF" (for example, DCT) of the patch Y'.

The next step is to compute the transfer function *Tr f* that allows $T_Y$, to be transformed to $T_{X'}$, in which the following formulas (10) and (11) are applied to each couple of coefficients.
If
(abs $(T_{X'}$ (u,v)) > th and abs $(T_Y$ (u,v) > th))
then

$$Trf (u,v) = T_{X'} (u,v)/ T_{Y'} (u,v) \qquad (10)$$

else

$$Trf (u,v) = 0 \qquad (11)$$

end if

Here, u and v are the transfer transform coordinates of the coefficients of $T_x$, $T_Y$, and $Trf$, and $th$ is a threshold of a given value, which avoids singularities in the $Trf$ transfer function. For example, $th$ could be equal to 1 in the context of H.264 or HEVC standards compression. HEVC (High Efficiency Video Coding) is described in the document, B. Bross, W.J. Han, G. J. Sullivan, J.R. Ohm, T. Wiegand JCTVC-K1003, "High Efficiency Video Coding (HEVC) text specification draft 9," Oct 2012.

The function $Trf$ is applied to the transformation (TF) of the initial patch of the base layer Y which gives the patch Y" after inverse transform (TF$^{-1}$). The patch Y" is composed of the template Y"$^{\mathrm{T}}$ and the block $Y''^B_m$ as shown by formulas (12) through (14).

$$Y'' = \begin{bmatrix} Y''^{\mathrm{T}} \\ Y''^{\mathrm{B}}_m \end{bmatrix} \qquad (12)$$

with

$$Y'' = \mathrm{TF}^{-1}(T_{Y'}) \qquad (13)$$

and

$$T_{Y'} = \mathrm{TF}(Y).Trf \qquad (14)$$

The formula $TF(Y).Trf$ corresponds to the application of the transfer function $Trf$ to the components of the transform patch $T_Y$ of the initial patch Y of the base layer, and this application is performed for each transform component (of coordinates u and v) as shown by formula (15).

$$T_{Y'}(u,v) = T_Y(u,v).\mathrm{Trf}(u,v) \qquad (15)$$

Finally, the prediction of the current block $X^B_u$ resides on the extraction of the block $Y''^B_m$ from the patch Y", and the notation m indicating that the block of prediction is built with help from m intra mode index of the base layer.

FIGs. 4A and 4B are block diagrams illustrating an apparatus for determining a prediction of a current block of an enhancement layer of the first embodiment. The principle of this description of intra SNR scalability is also illustrated in the FIGs. 4A and 4B.

With reference to FIGs. 4A and 4B, Local inter-layer LDR HDR prediction is described.

So as to clarify the description and particularly the decoder, we describe the SNR Scalable Video Coding (SVC) scheme:

(1) Firstly the base layer
(2) And secondly the enhancement layer

At the encoder (or coder) side shown in FIG. 4A, and the decoder side shown in FIG. 4B, knowing that the proposal focuses on the inter layer (bl->el) prediction.

At the coder and the decoder sides, only the intra image prediction mode, using the intra mode (m) is described, because our inter layer prediction mode uses intra mode (m). So it is well known that the function of the prediction unit (using a given RDO (Rate Distortion Optimizations) criterion) resides on the determination of the best prediction mode from:

(1) The intra and inter image predictions at the base layer level
(2) The intra, inter image and inter layer predictions (our new prediction mode) at the enhancement layer level

Signification of the index:

k: known
u: unknown
B: block
T: neighbor of the block (usually called "Template" in the video compression domain)
Pred: prediction
m: index of the intra coding mode from N available modes

Y, X, Y', X', and Y" are patches which are composed of a block and a template with reference to FIGs. 2A and 2B

Coder side (unit 400) in FIG. 4A:

An original block 401 be is tone mapped using the TMO 406 that gives the original tone mapped block $b_{bc}$.

**Base layer** (bl)

We consider the original base layer block $b_{bc}$ to encode

a) With the original block $b_{bc}$ and the (previous decoded) images stored in the reference frames buffer 426, the motion estimator (motion estimation unit) 429 finds the best inter image prediction block with a given motion vector (temporal prediction unit) and the temporal prediction (Temp Pred Pred) unit 430 gives the temporal prediction block. From the available intra prediction modes (illustrated with the FIG. 3, in case of H264) and neighboring reconstructed (or decoded) pixels the spatial prediction (Sp Pred) unit 428 gives the intra prediction block.
b) If the mode decision process (unit 425) chooses the intra image prediction mode (of m index, from N intra available modes), the residual error prediction rb is computed (by the combiner 421) with the difference between the original block $b_{bc}$ and the prediction block $\tilde{b}_b$ $\left( Y^B_{prd,m} \right)$
c) After, the residual error prediction rb is transformed and quantized to $r_{bq}$ by T Q unit 422 and finally entropy coded by entropy coder unit 423 and sent in the bitstream base layer.
d) The decoded block is locally rebuilt, by adding (with the combiner 427) the inverse transformed and dequantized by $T^{-1}$ $Q^{-1}$ unit 424 prediction error block $r_{bdq}$ to the prediction block $\tilde{b}_b$ giving the reconstructed (base layer) block
e) The reconstructed (or decoded) frame is stored in the (bl) reference frames buffer 426.

**Enhancement layer** (el)

We can notice that the structure of the coder of the enhancement layer is similar to the coder of the base layer, for example the units 407, 408, 409 and 413 have the same function than the respective units 425, 426, 429 and 430 of the coder of the base layer in terms of coding mode decision, temporal prediction and reference frames buffer.
We consider now the original enhancement layer block be to encode.

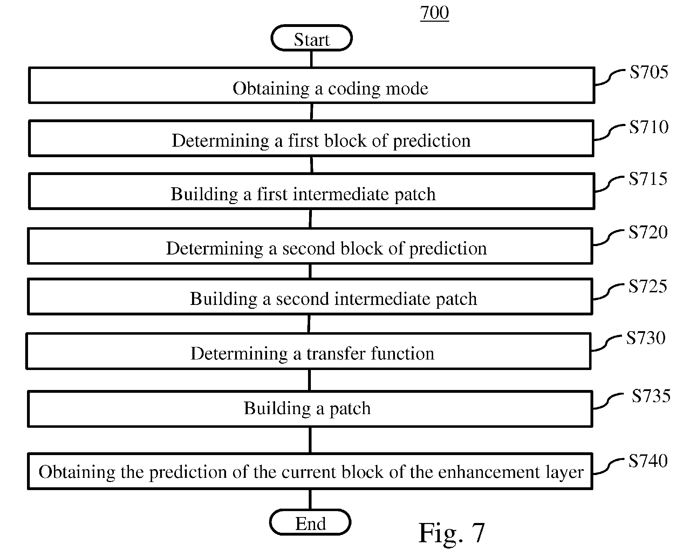

f) For the block of the enhancement layer, if the collocated block of the base layer is coded in intra image mode, then we consider the intra mode (of m index) of this collocated block (S705 of the method 700 shown in Fig. 7).
g) With this intra mode (of m index) of the base layer we determine:

o determine or re-use the intra block of prediction ($\tilde{b}_b$) $Y^B_{prd,m}$ at the base layer level with bl Spatial Pred (Sp pred) unit 428 (S710, Fig. 7),

o a first intermediate patch Y' with the neighbor $\left( Y^T_k \right)$ of collocated block $\left( Y^B_k \right)$ and the block of prediction

$Y^B_{prd,m}$ (S715, Fig. 7) then: formula (7)

h) similarly with this intra mode (of m index) of the base layer we determine:
o An intermediate intra block of prediction $X^B_{prd,m}$ at the enhancement layer level (with el Spatial Pred (Sp pred) unit 412; S720, Fig. 7),

o And a second intermediate patch X' with the neighbor $\left(X_k^T\right)$ of current block (be) and the intermediate block of prediction $X_{prd,m}^B$ (S725, Fig. 7) then: formula (6)

i) In the transform domain (for example, DCT) we determine the transfer function Trf from the patch Y' to the patch X' using the formulas (8) to (11) (S730, Fig. 7).

j) Now we consider the initial (decoded) patch of the base layer Y composed of the collocated block $\left(Y_k^B\right)$ and its neighbor $Y_k^T$, then formula (5) (S735-S740 in Fig. 7)

    1. We apply a transformation (for example, DCT) to the patch Y: TF(Y)
    2. the Trf function is now applied in the transform domain such as: $T_{Y''}$ = TF(Y).*Trf*
    3. an inverse transform (for example, DCT$^{-1}$) is computed on $T_{Y''}$ giving Y'' = TF$^{-1}$($T_{Y''}$) where the resulting patch is composed as the formula (12)

    4. finally the prediction which corresponds to the block $Y_m''^B$ is extracted from the patch Y".

All the steps from f to j are realized in the "Pred el/bl (Trf)" unit 411 in FIG. 4A.

k) the error residual $r_e$, between the enhancement layer block be and the inter-layer prediction $\left(Y_m''^B\right)$ (using the combiner 402) computed at the steps f to j, is transformed and quantized $re_q$ (T Q unit 403) and entropy coded by entropy coder unit 404 and sent in the enhancement layer bitstream

l) Finally the decoded block is locally rebuilt, by adding (with the combiner 410) the inverse transformed and dequantized prediction error block by T$^{-1}$ Q$^{-1}$ unit 405, $re_{dq}$ to the prediction $Y_m''^B$, and the reconstructed (or decoded) image is stored in the (el) reference frames buffer 408.

Decoder side (unit 450) in FIG. 4B:

**Base layer** (bl)

a) from the bl bitstream, for a given block, the entropy decoder (entropy decoder unit) 471 decodes the quantized error prediction $r_{bq}$ and the associated coding intra mode of m index

b) the residual error prediction $r_{bq}$ is dequantized and inverse transformed by T$^{-1}$ Q$^{-1}$ unit 472 to $r_{bdq}$,

c) With help from the m intra mode, the "spatial prediction (Sp Pred)" unit 475 and "prediction" unit 474 with the decoded neighboring pixel, give the block of Intra-image prediction $\tilde{b}_b$ or $Y_{prd,m}^B$.

d) The decoded block is locally rebuilt, by adding (with the combiner 473) the decoded and dequantized prediction error block $r_{bdq}$ to the prediction block $\tilde{b}_b$ (or $Y_{prd,m}^B$) giving the reconstructed block of the base layer.

e) The reconstructed (or decoded) frame is stored in the reference frames buffer 476, the decoded frames being used for the next (bl) intra image prediction and inter prediction (using the motion compensation unit 477).

**Enhancement layer** (el)

f) From the el bitstream, for a given block, the entropy decoder 451 decodes the quantized error prediction $r_{eq}$.

g) The residual error prediction $r_{eq}$ is dequantized and inverse transformed by T$^{-1}$ Q$^{-1}$ unit 452 and output $r_{edq}$.

h) If the coding mode of the block to decode corresponds to our inter-layer mode, then we consider the intra mode (of m index) of the collocated block of the base layer.

i) With this intra mode (of m index) of the base layer we determine:

o Determine or re-use the intra block of prediction $(\tilde{b}_b)$ $Y_{prd,m}^B$ at the base layer level (with bl Spatial Pred (Sp pred)unit 475),

o A first intermediate patch Y' with the neighbor $\left(Y_k^T\right)$ of collocated block $\left(Y_k^B\right)$ and the block of prediction $Y_{prd,m}^B$ then formula (7).

j) Similarly with this intra mode (of m index) of the base layer we determine:

o An intermediate intra block of prediction $X_{prd,m}^B$ at the enhancement layer level with el Spatial Pred (Sp pred) unit 455,

o And a second intermediate patch X' with the neighbor $\left(X_k^T\right)$ of current block (be) and the intermediate block of prediction $X_{prd,m}^B$ then formula (6).

k) In the transform domain (for example, DCT) we determine the transfer function Trf from the patch Y' to the patch X' using the formulas (8) to (11).

l) Now we consider the initial (decoded) patch of the base layer Y composed of the collocated block $\left(Y_k^B\right)$ and its neighbor $Y_k^T$, then formula (5).

1. We apply a transformation (for example, DCT) to the patch Y : TF(Y)
2. The Trf function is now applied in the transform domain such as: $T_{Y''} = TF(Y).Trf$
3. An inverse transform (for example, DCT$^{-1}$) is computed on $T_{Y''}$ giving Y'' = TF$^{-1}$($T_{Y''}$) where the resulting patch is composed as following:

$$Y'' = \begin{bmatrix} Y''^T \\ Y_m''^B \end{bmatrix} \qquad\qquad (12)$$

4. Finally the prediction corresponds to the block $Y_m''^B$ is extracted from the patch Y".

All the steps from h to 1 are realized in the "Pred el/bl (Trf)" unit 457, we can notice that the steps h to 1 are strictly the same to the steps f to j of the coder (of the first embodiment); obviously if the el coder chooses this inter-layer prediction mode by the mode decision of the el coder 407.

m) The el decoded block is built, by adding (with the combiner 453) the decoded and dequantized prediction error block $r_{edq}$ to the prediction block $Y_m''^B$ (via the prediction unit 454) giving the reconstructed (el) block.

n) The reconstructed (or decoded) image is stored in the (el) reference frames buffer 456, the decoded frames being used for the next (el) intra image prediction and inter prediction (using the motion compensation unit 458)

As described above, the apparatus of the first embodiment can be configured as illustrated by FIGs. 4A and 4B, by which the method of the first embodiment can be performed.

According to the method and apparatus for determining a prediction of a current block of an enhancement layer, by utilizing the coding mode of the collocated block of the base layer, the prediction of the current block of the enhancement layer can be readily and accurately obtained.

[Second Embodiment]

In the first embodiment, the intra mode of prediction of the base layer can be used in the objective to have first approximation of the current block and the collocated blocks, and the next steps correspond to the algorithm detailed with the formulas (8) through (14).

In a second embodiment, a description is given below of a more complex situation in which the encoder algorithms used to encode the base layer and the enhancement layer are different from each other, so that the modes of prediction are not compatible. A simple example can correspond to a base layer encoded with JPEG2000 (e.g., which is described in The JPEG-2000 Still Image Compression Standard, ISO/IEC JTC Standard, 1/SC29/WG1, 2005, and Jasper Software Reference Manual (Version 1.900.0), ISO/IEC JTC, Standard 1/SC29/WG1, 2005) and an enhancement layer encoded with H.264. In this situation, the first embodiment is not applicable, because the m intra mode is not available in the (for example, JPEG2000) base layer.

To solve this problem, testing the modes of prediction (available in the encoder of the enhancement layer) is performed on the pixels of the base layer to check those decoded pixels are obviously available, and finally the best intra mode is selected, according to a given criterion.

The current and the collocated patches of the enhancement and base layer are shown by the following formulas (16) and (17).

The current patch is:

$$X = \begin{bmatrix} X_k^T \\ X_u^B \end{bmatrix} \qquad (16)$$

The collocated patch (collocated of X) is: $Y = \begin{bmatrix} Y_k^T \\ Y_k^B \end{bmatrix}$   (17)

(17)

The selection of the best intra mode (of m index) is realized from a set S={$m_0$, ..., $m_{n-1}$} of n possible intra modes (for example those corresponding to the modes shown in FIG.3). For this purpose, a virtual prediction error is computed with the virtual prediction $Y_{prd,J}^B$ (of the collocated block $Y_k^B$) according to a given mode of j index, and an error of virtual prediction $ER_j$ between the block $Y_k^B$ and the virtual prediction $Y_{prd,j}^B$ as shown by the following formula (18).

$$ER_j = \sum_{p \in Y_k^B} \left( Y_k^B(p) - Y_{prd,j}^B(p) \right)^2 \qquad (18)$$

Here, $p$ corresponds to the coordinates of the pixel in the block to predict $Y_k^B$ and the block of virtual prediction $Y_{prd,j}^B$; $Y_k^B(p)$ is a pixel value of the block to predict $Y_k^B$; and $Y_{prd,j}^B(p)$ is a pixel value of the block of virtual prediction according to the intra mode of index j.

The best virtual prediction mode is given by the minimum of the virtual prediction error from the n available intra modes prediction as the following formula (19).

$$J_{mode} = \underset{j}{\mathrm{Argmin}}\{ER_j\} \qquad (19)$$

Here, it is remarked that the metric used to calculate the virtual prediction error by formula (18) is not limited to the sum of square error (SSE), other metrics are possible: sum of absolute difference (SAD), sum of absolute Hadamard transform difference (SATD).

The virtual prediction $Y_{prd,J_{mode}}^B$ appropriated to the collocated block $Y_k^B$ is obtained, and then the same mode ($J_{mode}$) is used so as to compute a virtual prediction $(X_{prd,J_{mode}}^B)$ dedicated to the current block $(X_u^B)$ of the enhancement layer.

The new intermediates patches are provided as the following formulas (20) and (21).

The current intermediate patch X':

$$X' = \begin{bmatrix} X_k^T \\ X_{prd,J_{mode}}^B \end{bmatrix} \qquad (20)$$

The intermediate patch Y' of the base layer:

$$Y' = \begin{bmatrix} Y_k^T \\ Y_{prd,J_{\mathrm{mode}}}^B \end{bmatrix} \qquad (21)$$

Now, the process to find the (definitive) prediction of the current block from the base layer using a transfer function *Trf* is similar to the processing given by the previous formulas (8) and (9), once the intermediate virtual prediction blocks $Y_{prd,J_{\mathrm{mode}}}^B$ and $X_{prd,J_{\mathrm{mode}}}^B$ are obtained.

Having the transfer function *Trf,* this function is applied to the patch Y that gives, after inverse transform, the patch Y" from which the desired prediction is extracted, as shown by formula (22).

$$Y'' = \begin{bmatrix} Y''^T \\ Y''^B_{J_{\mathrm{mode}}} \end{bmatrix} \qquad (22)$$

In formula (22), the prediction of the current block is $Y''^B_{J_{\mathrm{mode}}}$. Here the process is similar to those used to the formula (12) by using the formulas (13), (14) and (15) with here the virtual mode $J_{\mathrm{mode}}$.

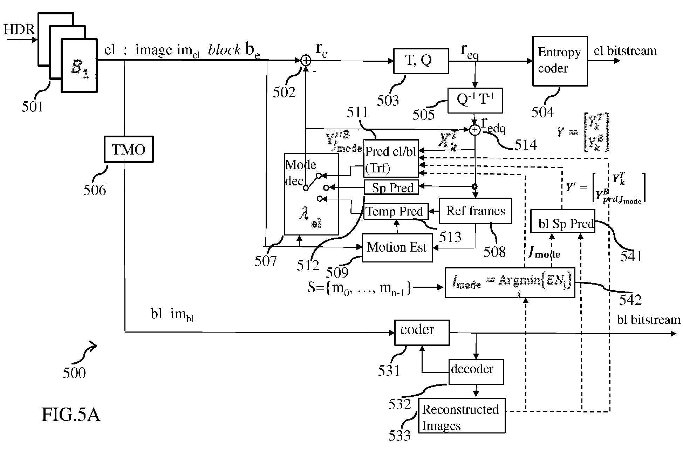

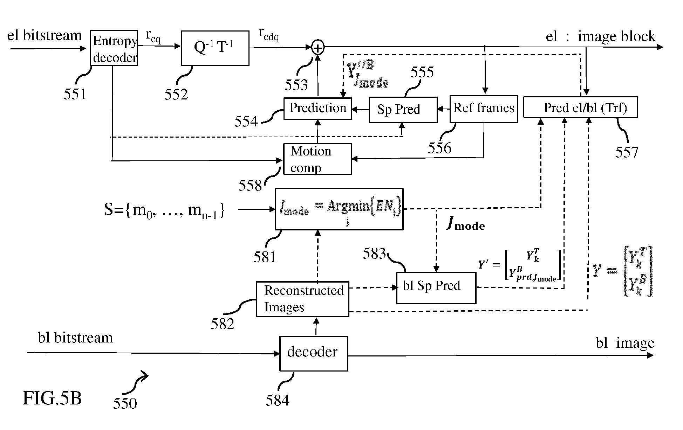

The principle of this description of intra SNR scalability is illustrated in FIGs. 5A and 5B. FIG. 5 is a block diagram illustrating a configuration of an apparatus for determining a prediction of a current block of an enhancement layer of a second embodiment of the present disclosure.

Coder side (unit 500) in Fig 5A:

An original HDR image $im_{el}$, composed of block be 501, is tone mapped using the TMO 506 that gives the original tone mapped image $im_{bl}$.

**Base layer** (bl)

We consider the original base layer image $im_{bl}$ to encode. With a given video encoder 531 the image is encoded with the coder 531 and locally decoded by the local in-loop decoder 532. The local decoded images are stored in the "reconstructed images buffer" 533. The resulting encoded images are sent in the base layer bitstream.

**Enhancement layer** (el)

We consider now the original enhancement layer block be to encode.

a) For the current block of the enhancement layer, we consider all intra coding modes available of the enhancement layer encoder intra mode (of m index),

o We find (formula (19), with "Jmode= Argminj {ER$_j$}" unit 542) the best (of Jmode index) prediction mode dedicated to the collocated block (of the base layer) from the neighboring pixels of this collocated block, (according to a given criterion (formula (19)), and the encoding modes of the enhancement layer encoder).

b) With this intra mode (of Jmode index) of the enhancement layer we determine:
o The intra block of prediction $Y_{prd,J_{mode}}^B$ at the base layer level (with bl Spatial Pred (Sp Pred) unit 541),
o A first intermediate patch Y' with the neighbor $\left(Y_k^T\right)$ of collocated block $\left(Y_k^B\right)$ and the block of prediction $Y_{prd,J_{mode}}^B$ then formula (21).

c) Similarly with this intra mode (of Jmode index) of the base layer we determine:
o An intermediate intra block of prediction $X_{prd,J_{mode}}^B$ at the enhancement layer level (with el Spatial Pred (Sp Pred) unit 512),
o And a second intermediate patch X' with the neighbor $\left(X_k^T\right)$ of current block (be) and the intermediate block

of prediction $X^B_{prd_{J_{mode}}}$ then formula (20).

d) In the transform domain (for example, DCT) we determine the transfer function Trf from the patch Y' t$_o$ the patch X' using the formulas (8) to (11).

e) Now we consider the initial (decoded) patch of the base layer Y composed of the collocated block $\left(Y^B_k\right)$ and its neighbor $Y^T_k$, then formula (5).

1. We apply a transformation (for example, DCT) to the patch Y : TF(Y)

2. The Trf function is now applied in the transform domain such as: $T_{Y''}$ = TF(Y).$Trf$

3. An inverse transform (for example, DCT$^{-1}$) is computed on $T_{Y''}$ giving Y'' = TF$^{-1}$($T_{Y''}$) where the resulting patch is composed as formula (22).

4. Finally the prediction corresponds to the block $Y''^B_{J_{mode}}$ is extracted from the patch Y".

All the steps from b to e are realized in the "Pred el/bl (Trf)" unit 511.

f) The error residual(computed using the combiner 502) r$_e$, between the enhancement layer block be and the inter-layer prediction $\left(Y''^B_{J_{mode}}\right)$ computed at the steps a to e, is transformed and quantized re$_q$ by T, Q unit 503 and entropy coded by entropy coder 504 and sent in the enhancement layer bitstream.

g) Finally the decoded block is locally rebuilt, by adding (using the combiner 514) the inverse transformed and dequantized prediction error block by T$^{-1}$ Q$^{-1}$ unit 505 from re$_{dq}$ to the prediction $Y''^B_{J_{mode}}$, and the reconstructed (or decoded) image is stored in the (el) reference frames buffer 508.

About the others units 507 and 509 the function is respectively dedicated to the classical coding mode decision and the motion estimation for the inter-image prediction.

Decoder side (unit 550) Fig 5B (unit 550):

**Base layer** (bl)

From the bl bitstream, the base layer sequence is decoded with the decoder 584. The reconstructed image buffer 582 stores the decoded frames used to the inter-layer prediction.

**Enhancement layer** (el)

a) From the el bitstream, for a given block, the entropy decoder 551 decodes the quantized error prediction r$_{eq}$

b) The residual error prediction r$_{eq}$ is dequantized and inverse transformed by T$^{-1}$ Q$^{-1}$ unit 552 to generate r$_{edq}$.

c) If the coding mode of the block to decode corresponds to our inter-layer mode, then we need of an intra mode (of Jmode index) of the collocated block of the base layer.

o For the current block of the HDR layer, we consider all intra coding modes available of the enhancement layer encoder intra mode (of Jmode index),

o Find (formula (19), and "Jmode= Argminj {ER$_j$}" unit 581) the best (of Jmode index) prediction mode dedicated to the collocated block (of the base layer) from the neighboring pixels of this collocated block (according to a given criterion (formula (19)), and the encoding modes of the enhancement layer encoder)

d) With this intra mode (of Jmode index) of the enhancement layer we determine:

o The intra block of prediction $Y^B_{prd_{J_{mode}}}$ at the base layer level with bl Spatial Pred (bl Sp Pred) unit 583,

o A first intermediate patch Y' with the neighbor $\left(Y^T_k\right)$ of collocated block $\left(Y^B_k\right)$ and the block of prediction $Y^B_{prd_{J_{mode}}}$ then formula (21).

e) Similarly with this intra mode (of Jmode index) of the base layer we determine:

o An intermediate intra block of prediction $X^B_{prd_{J_{mode}}}$ at the enhancement layer level with el Spatial Pred (Sp Pred) unit 555,

o And a second intermediate patch X' with the neighbor $\left(X_k^T\right)$ of current block (be) and the intermediate block of prediction $X_{prd,j_{mode}}^B$ then formula (20).

f) In the transform domain (for example, DCT) we determine the transfer function Trf from the patch Y' to the patch X' using the formulas (8) to (11).

g) Now we consider the initial (decoded) patch of the base layer Y composed of the collocated block $\left(Y_k^B\right)$ and its neighbor $Y_k^T$, then formula (5).

1. We apply a transformation (for example, DCT) to the patch Y : TF(Y)
2. The Trf function is now applied in the transform domain such as: $T_{Y''}$ = TF(Y).*Trf*
3. An inverse transform (for example, DCT$^{-1}$) is computed on $T_{Y''}$ giving Y" =$TF^{-1}(T_{Y''})$ where the resulting patch is composed as formula (22).
4. Finally the prediction corresponds to the block $Y_{j_{mode}}^{rrB}$ is extracted from the patch Y".

All the steps from c to g are realized in the "Pred el/bl (Trf)" unit 557, we can notice that the steps d to h are strictly the same to the steps b to e of the coder (of the second embodiment); obviously if the el coder chooses this inter-layer prediction mode by mode decision of the el coder (unit 507).

h) The el decoded block is built, by adding (using the combiner 553)) the decoded and dequantized prediction error block (unit 552) $r_{edq}$ to the prediction block $Y_{j_{mode}}^{rrB}$ (via the prediction unit 554 and unit 557) giving the reconstructed (el) block.

i) The reconstructed (or decoded) image is stored in the (el) reference frames buffer 556, the decoded frames being used for the next (el) intra image prediction and inter image prediction using the motion compensation unit 558

According to the method and apparatus for determining a prediction of a current block of an enhancement layer, even when the coding mode of the base layer is different from that of the enhancement layer, the appropriate inter layer coding mode is selected, and then the prediction of the current block can be obtained.

[Third Embodiment]

A description of a method and an apparatus for determining a prediction of a current block of an enhancement layer is given below of a third embodiment of the present disclosure.

In spatial scalability, the spatial resolution of the base layer ($I_e$) and the enhancement layer ($I_b$) are different from each other, but regarding the availability of the mode of prediction of the base layer, there are different possibilities.

More specifically, a description is given below of a case in which the spatial scalability is in the same video coding standard, similarly to the first embodiment.

If the size of the current block $\left(X_u^B\right)$ is the same as the collocated up-sampled of the block $\left(Y_k^B\right)$ of the base layer, the prediction mode m of the base layer can be utilized, and the processing explained in the first embodiment can be applied to this case. For example (in case of spatial scalability NxN → 2Nx2N), a given 8x8 current block has a 4x4 collocated block in the base layer. Then, the intra mode m corresponds to the intra coding mode used to encode this 4x4 block (of $I_b$ layer) and the 8x8 block of prediction $Y_{prd,m}^B$ could be the up-sampled prediction of the base layer (4x4→8x8), or the prediction $Y_{prd,m}^B$ could be computed on the up-sampled image of the base layer with the same m coding mode. As the first embodiment, once obtained the base layer and enhancement layer intermediate prediction blocks, the base layer and enhancement layer intermediate patchs are built. After from the two intermediate patchs, the transfer function is estimated using the formula 8 to 11. Finally, the transfer function is applied to the up-sampled and transformed (ex DCT) patch of the base layer, the inter layer prediction being extracted as in the first embodiment.

In contrast, if the size of the current block $\left(X_u^B\right)$ is different from the up-sampled of the block $\left(Y_k^B\right)$ of the base layer, the coding mode m is not really available. In this case, the principle explained in the second embodiment can be-used. In other words, the best coding mode m has to be estimated in the up-sampled base layer, the remaining processing (dedicated to the inter-layer prediction) being the same than the second embodiment; knowing that the estimated transfer function (*Trf*) is applied to the up-sampled and transformed (ex DCT) base-layer patch.

[Fourth Embodiment]

A description of a method and an apparatus for determining a prediction of a current block of an enhancement layer is given below of a fourth embodiment of the present disclosure.

Based on LDR/HDR scalable video coding, a fourth embodiment of the present disclosure provides a coding mode choice algorithm for the block of the base layer, in order to re-use the selected mode to build the prediction ($I_b \rightarrow I_e$) with the technique provided in the first embodiment. The choice of the coding mode, at the base layer level, may cause the inherent distortions at the two layers level.

Here, the RDO (Rate Distortion Optimization) technique serves to address the distortions of LDR and HDR and the coding costs of the current HDR and collocated LDR blocks, and the RDO criterion gives the prediction mode that provides the best compromise in terms of reconstruction errors and coding costs of the base and enhancement layers. To this end, the classical RDO criteria for the two layers are provided as the following formulas (23) and (24).

$$\text{LDR: } \text{Cst}_{\text{bl}} = \text{Dist}_{\text{bl}} + \lambda_{\text{bl}} . B_{\text{bl}}^{\text{cst}} \qquad (23)$$

$$\text{HDR: } \text{Cst}_{\text{el}} = \text{Dist}_{\text{el}} + \lambda_{\text{el}} . B_{\text{el}}^{\text{cst}} \qquad (24)$$

The terms $B_{\text{bl}}^{\text{cst}}$ and $B_{\text{el}}^{\text{cst}}$ are composed of the coding cost of the DCT coefficients of the error residual of prediction of the base layer and the enhancement layer, respectively, and the syntax elements (block size, coding mode ...) contained in the header of the blocks ( $B_{\text{bl}}^{\text{cst}}$ and $B_{\text{el}}^{\text{cst}}$ ) that allow the predictions to be rebuilt at the decoder side.

Considering the example of the block $Y_{or}^{B}$ (being the original block) of the base layer, the quantized coefficients of the error residual of prediction after inverse quantization and inverse transform (for example, DCT$^{-1}$), this residual error added to the prediction provides the reconstructed (or decoded) block $(Y_{dec}^{B})$. With the original block $Y_{or}^{B}$ and the decoded one $Y_{dec}^{B}$, the base layer distortion associated to this block is provided as the following formula (25).

$$\text{Dist}_{\text{bl}} = \sum_{\text{p} \in Y_{or}^{B}} \left( Y_{or}^{B}(p) - Y_{dec}^{B}(p) \right)^2 \qquad (25)$$

In the RDO criteria, a well-known parameter $\lambda_{\text{bl}}$ is used so as to give the best compromise rate distortion. In this example, the best mode, among N possible modes, is provided as the following formula (26).

$$J_{\text{mode}}^{\text{bl}} = \underset{j}{\text{Argmin}} \{ \text{Cst}_{\text{bl}}^{j} \} \qquad (26)$$

It is possible to re-write the formulas (23) and (24) in other form as shown by formulas (27) and (28).

$$\text{LDR: } \text{Cst}_{\text{bl}}' = \frac{\text{Dist}_{\text{bl}}}{\lambda_{\text{bl}}} + B_{\text{bl}}^{\text{cst}} \qquad (27)$$

$$\text{HDR: } \text{Cst}_{\text{el}}' = \frac{\text{Dist}_{\text{el}}}{\lambda_{\text{el}}} + B_{\text{el}}^{\text{cst}} \qquad (28)$$

The formulas (27) and (28) can be mixed with a blending parameter $\alpha$ that allows a global compromise between base layers and enhancement layers as the following formula (29).

$$Cst' = \left(\frac{Dist_{bl}}{\lambda_{bl}} + B_{bl}^{cst}\right).(1-\alpha) + \left(\frac{Dist_{el}}{\lambda_{el}} + B_{el}^{cst}\right).\alpha \qquad (29)$$

with

$$0 \le \alpha \le 1$$

The best mode (according to formula (29)) gives the mode of the base layer, which produces the minimum global cost *Cst'* via one of the N coding modes of the base layer as shown by the following formula (30).

$$J_{mode}^{bl} = \underset{j}{\mathrm{Argmin}}\{Cst'_j\} \qquad (30)$$

From this formula (30), the following matters are noted.

If $\alpha = 0$, the situation corresponds to the algorithm proposed in the first embodiment, in which the coding mode (of index m) of the base layer can be used in order to build the inter-layer prediction (bl→el) via the transfer function *Tr f* and finally provides the inter-layer prediction $Y''^{B}_m$ with $m = J_{mode}^{bl}$

On the contrary, if $\alpha = 1$, the choice of the coding mode principally focuses on the enhancement layer, and there is a risk of the base layer containing a lot of visual artifacts.

If $\alpha = 0.5$, a compromise between the two layers is necessary. In this case, it is important to notice that the choice of coding mode of the base layer is really based on the impact not only at the base layer level but also at the enhancement layer level, more precisely :

- The impact on the base layer according to the choice of the base layer coding mode
- And the impact on the enhancement layer using the entire process explained in the first embodiment i.e. the inter layer prediction based on the previous base layer coding mode

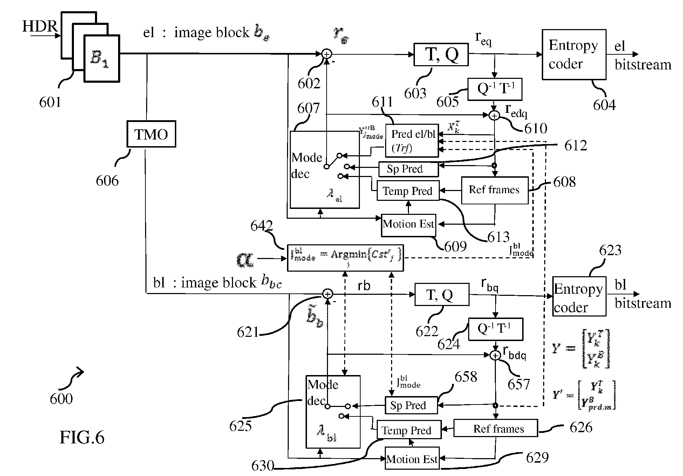

FIG. 6 shows a block diagrams illustrating an apparatus for determining a prediction of a current block of an enhancement layer of the fourth embodiment. With reference to FIG. 6, local inter-layer prediction is described. For the description, only the intra image prediction mode, using the intra mode (m) is described, because our inter layer prediction mode uses intra mode (m).

Notice that, only the coder side is described because in the fourth embodiment the associated decoder is the same than the first embodiment and corresponds to the decoder illustrated by the Fig 4.b.

**Coder side** (unit 600) in FIG. 6:

An original block 601 be is tone mapped using the TMO 606 that gives the original tone mapped block $b_{bc}$.

Notice that in the specific case of inter-layer prediction of the fourth embodiment, the units 625 and 607 (corresponding to the coding mode decision units of the base and enhancement layers) are not used. In that case the unit 642 replace the units 625 and 607, in fact the unit 642 selects the best intra $J_{mode}^{bl}$ mode using the formula 30 and sends that mode ($J_{mode}^{bl}$) to the units 625 and 607.

Base layer intra coding mode selection ($J_{mode}^{bl}$) in unit 642

For a given blending parameter $\alpha$ that allows a global compromise between base layers and enhancement layers as the following formula (29, and for each N available intra prediction modes (illustrated with the FIG. 3, in case of H264) We operate N iterations on the coding modes:

**Loop on N intra modes of m index {**

a) With the neighboring reconstructed (or decoded) pixels of the base layer the spatial prediction and the intra coding mode m (m being an index), the (Sp Pred) unit 658 gives an intra base layer prediction block
b) With the neighboring reconstructed (or decoded) pixels of the enhancement layer the spatial prediction and the same m intra coding mode (Sp Pred) unit 612 gives an intermediate intra enhancement layer prediction block

o The unit 611 builds the patch of the base layer composed of the intra base layer neighbor and the block of prediction of the step (a)
o The unit 611 builds the patch of the enhancement layer composed of intra enhancement layer neighbor and the block of prediction of the step (b)
o In the transform domain (for example, DCT) determine (in unit 611)the transfer function Trf from the patch Y' to the patch X' using the formulas (8) to (11).
o Still in unit 611,

■ consider the initial (decoded) patch of the base layer Y composed of the collocated block $\left(Y_k^B\right)$ and its neighbor $Y_k^T$, then formula (5)

■ apply a transformation (for example, DCT) to the patch Y: TF(Y)
■ apply the Trf function is applied in the transform domain such as: $T_{Y''}$ = TF(Y).$Trf$
■ inverse transform (for example, DCT$^{-1}$) $T_{Y''}$ giving Y'' = TF$^{-2}$($T_{Y''}$) where the resulting patch is composed as the formula (12)

■ extracted the prediction corresponding to the block $Y_m''^B$ from the patch Y''

c) In units 642, the best mode (according to formula (29)) is selected, which produces the minimum global cost Cst' via one of the N coding modes (formula (30))

**} end Loop on N intra modes of m index**

Finally the best intra $J_{mode}^{bl}$ is sent to the base layer spatial prediction unit 658 and decision unit 607 and to the enhancement layer unit 611.

Once the $J_{mode}^{bl}$ found, the remaining of the process is similar to the description of coder of the first embodiment, knowing that the base layer intra mode index $m = J_{mode}^{bl}$.

Base layer (bl)

We consider the original base layer block $b_{bc}$ to encode

d) With the original block $b_{bc}$ and the (previous decoded) images stored in the reference frames buffer 626, the motion estimator (motion estimation unit) 629 finds the best inter image prediction block with a given motion vector (temporal prediction unit) and the temporal prediction (Temp Pred Pred) unit 630 gives the temporal prediction bloc
e) If the mode decision process (unit 625) chooses the intra image prediction mode (of $m = J_{mode}^{bl}$ index, the residual error prediction rb is computed (by the combiner 621) with the difference between the original block $b_{bc}$ and the prediction block $\tilde{b}_b$ $\left(Y_{prd.m}^B\right)$
f) After, the residual error prediction rb is transformed and quantized to $r_{bq}$ by T Q unit 622 and finally entropy coded by entropy coder unit 623 and sent in the bitstream base layer.
g) The decoded block is locally rebuilt, by adding (with the combiner 657) the inverse transformed and dequantized by T$^{-1}$ Q$^{-1}$ unit 624 prediction error block $r_{bdq}$ to the prediction block $\tilde{b}_b$ giving the reconstructed (base layer) block
h) The reconstructed (or decoded) frame is stored in the (bl) reference frames buffer 626.

Enhancement layer (el)

We can notice that the structure of the coder of the enhancement layer is similar to the coder of the base layer, for example the units 607, 608, 609 and 613 have the same function than the respective units 625, 626, 629 and 630 of the coder of the base layer in terms of coding mode decision, temporal prediction and reference frames buffer. We consider now the original enhancement layer block be to encode.

i) For the block of the enhancement layer, if the collocated block of the base layer is coded in intra image mode, then we consider the intra mode (of m index with m= $J_{mode}^{bl}$) of this collocated block.

j) With this intra mode (of m index) of the base layer we determine:

o determine or re-use the intra block of prediction ($\tilde{b}_b$) $Y_{prd,m}^B$ at the base layer level with bl Spatial Pred (Sp pred) unit 658,

o a first intermediate patch Y' with the neighbor $\left(Y_k^T\right)$ of collocated block $\left(Y_k^B\right)$ and the block of prediction $Y_{prd,m}^B$ then: formula (7)

k) similarly with this intra mode (of m index) of the base layer we determine:

o An intermediate intra block of prediction $X_{prd,m}^B$ at the enhancement layer level (with el Spatial Pred (Sp pred) unit 612),

o And a second intermediate patch X' with the neighbor $\left(X_k^T\right)$ of current block (be) and the intermediate block of prediction $X_{prd,m}^B$ then: formula (6)

l) In the transform domain (for example, DCT) we determine the transfer function Trf from the patch Y' to the patch X' using the formulas (8) to (11).

m) Now we consider the initial (decoded) patch of the base layer Y composed of the collocated block $\left(Y_k^B\right)$ and its neighbor $Y_k^T$, then formula (5)

5. We apply a transformation (for example, DCT) to the patch Y: TF(Y)
6. the Trf function is now applied in the transform domain such as: $T_{Y''}$ = TF(Y).*Trf*
7. an inverse transform (for example, DCT$^{-1}$) is computed on $T_{Y''}$ giving Y" =TF$^{-1}$($T_{Y''}$) where the resulting patch is composed as the formula (12)
8. finally the prediction corresponds to the block $Y_m''^B$ is extracted from the patch Y".

All the steps from j to m are realized in the "Pred el/bl (Trf)" unit 611.

n) the error residual $r_e$, between the enhancement layer block $b_e$ and the inter-layer prediction $\left(Y_m''^B\right)$ (using the combiner 602) computed at the steps j to m, is transformed and quantized $re_q$ (T Q unit 603) and entropy coded by entropy coder unit 604 and sent in the enhancement layer bitstream

o) Finally the decoded block is locally rebuilt, by adding (with the combiner 610) the inverse transformed and dequantized prediction error block by T$^{-1}$ Q$^{-1}$ unit 605, $re_{dq}$ to the prediction $Y_m''^B$, and the reconstructed (or decoded) image is stored in the (el) reference frames buffer 608.

As described above, the embodiments of the present disclosure relates to the SNR and spatial scalable LDR/HDR video encoding with the same or different encoders for the two layers. The LDR video can be implemented from the HDR video with any tone mapping operators: global or local, linear or non-linear. In the scalable solution of the embodiments, the inter layer prediction is implemented on the fly without additional specific meta-data.

The embodiments of the present disclosure concern both the encoder and the decoder. The embodiments of the present disclosure applied to decoding processes generally disclosed, and the decoding is detectable according to the embodiments of the present disclosure.

The embodiments of the present disclosure can be applied to image and video compression. In particular, the embodiments of the present disclosure may be submitted to the ITU-T or MPEG standardization groups as part of the development of a new generation encoder dedicated to the archiving and distribution of LDR/HDR video content.

All examples and conditional language recited herein are intended for pedagogical purposes to aid the reader in understanding the disclosure and the concepts contributed by the inventor to furthering the art, and are to be construed as being without limitation to such specifically recited examples and conditions, nor does the organization of such examples in the specification relate to a showing of the superiority or inferiority of the disclosure.

**Claims**

1. A method (700) for determining a prediction of a current block of an enhancement layer dedicated to a high dynamic range coding, the method comprising:

   obtaining (S705) a coding mode capable of encoding the prediction of the current block from a collocated block of a base layer having a low dynamic range that is lower than the high dynamic range, the base layer being tone mapped by using a tone mapping operator dedicated to a low dynamic range video;
   determining (S710) a first block of prediction including neighboring pixels of the collocated block at a base layer level with the coding mode;
   building (S715) a first intermediate patch of the low dynamic range with the neighbor of the collocated block and the first block of prediction;
   determining (S720) a second block of prediction including neighboring pixels of the current block at a high dynamic range layer level with the coding mode;
   building (S725) a second intermediate patch of the high dynamic range with the neighbor of the current block and the second block of prediction;
   determining (S730) a transfer function to transform the first intermediate patch to the second intermediate patch in a transform domain;
   building (S735) a patch by applying the transfer function to a transformed initial patch of the base layer in a transform domain and then applying an inverse transform to the resulting patch so as to return in a pixel domain; and
   obtaining (S740) the prediction of the current block of the enhancement layer by extracting a block from the patch, the extracted block in the patch being collocated to the current block of the enhancement layer in the second intermediate patch.

2. The method as claimed in claim 1, wherein a first coding mode of the collocated block of the base layer is used for the coding mode when the first coding mode is available for the current block of the enhancement layer.

3. The method as claimed in claim 1, wherein the obtaining (S705) the coding mode is performed by selecting a most appropriate coding mode from possible coding modes when a first coding mode of the collocated block of the base layer is not available for the current block of the enhancement layer.

4. The method as claimed in claim 3, wherein the selecting the most appropriate coding mode is performed by selecting a coding mode that minimizes a difference between the collocated block of the base layer and a virtual prediction of the collocated block of the base layer with each of the possible coding modes of the enhancement layer.

5. The method as claimed in claim 4, further comprising:

   encoding of the difference between the current block of the enhancement layer and the prediction of the current block of the enhancement layer.

6. The method as claimed in claim 1, wherein a first coding mode of the collocated block of the base layer is used for the coding mode if the size of the current block of the enhancement layer is the same as the size of up-sampled collocated block of the base layer.

7. The method as claimed in claim 1, wherein a first coding mode of the collocated block of the base layer is selected by taking into account a compromise in terms of reconstruction errors in the base and enhancement layers and coding costs of the base and enhancement layers.

8. An apparatus (400) for determining a prediction of a current block of an enhancement layer dedicated to a high dynamic range coding, the apparatus comprising:

   a coding mode obtaining unit (407, 425) configured to obtain a coding mode capable of encoding the prediction of the current block from a collocated block of a base layer having a low dynamic range that is lower than the high dynamic range, the base layer being tone mapped by using a tone mapping operator (406) dedicated to a low dynamic range video;

a first intermediate patch creation unit (428) configured to determine a first block of prediction including neighboring pixels of the collocated block at a base layer level with the coding mode and to build a first intermediate patch of the low dynamic range with the collocated neighbor of the block and the first block of prediction;

a second intermediate patch creation unit (412) configured to determine a second block of prediction including neighboring pixels of the current block at a high dynamic range layer level with the coding mode and to build a second intermediate patch of the high dynamic range with the neighbor of the current block and the second block of prediction; and

a unit (411) to determine a transfer function to transform the first intermediate patch to the second intermediate patch in a transform domain, to build a patch by applying the transfer function to a transformed initial patch of the base layer in a transform domain and then applying an inverse transform to the resulting patch so as to return in a pixel domain and to obtain the prediction of the current block of the enhancement layer by extracting a block from the patch, the extracted block being in the patch collocated to the current block of the enhancement layer in the second intermediate patch.

9. The apparatus (400) as claimed in claim 8, wherein the coding mode obtaining unit (407, 427) uses a first coding mode of the collocated block of the base layer as the coding mode when the first coding mode is available for the current block of the enhancement layer.

10. The apparatus (500) as claimed in claim 8, wherein the coding mode obtaining unit (507) is configured to select a most appropriate coding mode from possible coding modes when a first coding mode of the collocated block of the base layer is not available for the current block of the enhancement layer.

11. The apparatus (500) as claimed in claim 10, wherein the coding mode obtaining unit (507) is configured to select the most appropriate coding mode by selecting a coding mode that minimizes a difference between the collocated block of the base layer and a virtual prediction of the collocated block of the base layer with each of the possible coding modes of the enhancement layer.

12. The apparatus (500) as claimed in claim 11, further comprising:

an encoder configured to encode the difference between the current block of the enhancement layer and the prediction of the current block of the enhancement layer.

13. The apparatus (400) as claimed in claim 8, wherein a first coding mode of the collocated block of the base layer is used for the coding mode if the size of the current block of the enhancement layer is the same as the size of up-sampled collocated block of the base layer.

14. The apparatus (600) as claimed in claim 8, wherein a first coding mode of the collocated block of the base layer is selected by taking into account a compromise in terms of reconstruction errors in the base and enhancement layers and coding costs of the base and enhancement layers.

# FIG.1

# FIG.2A

# FIG.2B

## FIG.3A

## FIG.3B

| A | B | C | D |
|---|---|---|---|
| a | b | c | d |
| e | f | g | h |
| i | j | k | l |
| m | n | o | p |

MODE 0
VERTICAL

## FIG.3C

| I | a | b | c | d |
|---|---|---|---|---|
| J | e | f | g | h |
| K | i | j | k | l |
| L | m | n | o | p |

MODE 1
HORIZONTAL

## FIG.3D

| A | B | C | D |
|---|---|---|---|
| I | a | b | c | d |
| J | e | f | g | h |
| K | i | j | k | l |
| L | m | n | o | p |

MODE 2
DC

## FIG.3E

| A | B | C | D | E | F | G | H |
|---|---|---|---|---|---|---|---|
| a | b | c | d | | | | |
| e | f | g | h | | | | |
| i | j | k | l | | | | |
| m | n | o | p | | | | |

MODE 3
DIAGONAL
DOWN-LEFT

## FIG.3F

| Q | A | B | C | D |
|---|---|---|---|---|
| I | a | b | c | d |
| J | e | f | g | h |
| K | i | j | k | l |
| L | m | n | o | p |

MODE 4
DIAGONAL
DOWN-RIGHT

## FIG.3G

| Q | A | B | C | D |
|---|---|---|---|---|
| I | a | b | c | d |
| J | e | f | g | h |
| K | i | j | k | l |
| L | m | n | o | p |

MODE 5
VERTICAL RIGHT

## FIG.3H

| Q | A | B | C | D |
|---|---|---|---|---|
| I | a | b | c | d |
| J | e | f | g | h |
| K | i | j | k | l |
| L | m | n | o | p |

MODE 6
HORIZONTAL
DOWN

## FIG.3I

| A | B | C | D | E | F | G |
|---|---|---|---|---|---|---|
| a | b | c | d | | | |
| e | f | g | h | | | |
| i | j | k | l | | | |
| m | n | o | p | | | |

MODE 7
VERTICAL LEFT

## FIG.3J

| I | a | b | c | d |
|---|---|---|---|---|
| J | e | f | g | h |
| K | i | j | k | l |
| L | m | n | o | p |

MODE 8
HORIZONTAL UP

EP 3 113 492 A1

FIG.4A

$$Y = \begin{bmatrix} Y_k^T \\ Y_k^B \end{bmatrix}$$

$$Y' = \begin{bmatrix} Y_k^T \\ Y_{prd,m}^B \end{bmatrix}$$

el bitstream $\rightarrow$ **Entropy decoder** $\xrightarrow{r_{eq}}$ $\boxed{Q^{-1} T^{-1}}$ $\xrightarrow{r_{edq}}$ $\oplus$ $\rightarrow$ el : image block

451     452     453

$Y_m^{l/B}$    455

454   **Prediction** $\leftarrow$ **Sp Pred** $\leftarrow$ **Ref frames**    **Pred el/bl (Trf)**

456     457

**Motion comp**

458

$m$

$$Y = \begin{bmatrix} Y_k^T \\ Y_k^B \end{bmatrix}$$

$$Y' = \begin{bmatrix} Y_k^T \\ Y_{prd,m}^B \end{bmatrix}$$

bl bitstream $\rightarrow$ **Entropy decoder** $\xrightarrow{r_{bq}}$ $\boxed{Q^{-1} T^{-1}}$ $\xrightarrow{r_{bdq}}$ $\oplus$ $\rightarrow$ bl : image block

473

471     472

$\tilde{b}_b$    474    475

450

$m$

**Prediction** $\leftarrow$ **Sp Pred** $\leftarrow$ **Ref frames**

**Motion Comp**

476

**FIG.4B**

477

FIG.5A

el bitstream → | Entropy decoder | $^{r_{eq}}$ → | $Q^{-1}T^{-1}$ | $^{r_{edq}}$ → ⊕ → el : image block

551    552    553

$Y'^{B}_{J_{mode}}$    555

| Prediction | ← | Sp Pred | ← | Ref frames |    | Pred el/bl (Trf) |

554    556    557

| Motion comp |

558

$S = \{m_0, \ldots, m_{n-1}\}$ → | $J_{mode} = \mathrm{Argmin}_{j}\{EN_j\}$ |

581    $J_{mode}$

583    $Y' = \begin{bmatrix} Y_k^T \\ Y_{prd J_{mode}}^B \end{bmatrix}$    $Y = \begin{bmatrix} Y_k^T \\ Y_k^B \end{bmatrix}$

| Reconstructed Images |    | bl Sp Pred |

582

bl bitstream → | decoder | → bl image

FIG.5B    550    584

FIG.6

700

```
Start
```

Obtaining a coding mode — S705

Determining a first block of prediction — S710

Building a first intermediate patch — S715

Determining a second block of prediction — S720

Building a second intermediate patch — S725

Determining a transfer function — S730

Building a patch — S735

Obtaining the prediction of the current block of the enhancement layer — S740

```
End
```

Fig. 7

Europäisches
Patentamt

European
Patent Office

Office européen
des brevets

# EUROPEAN SEARCH REPORT

Application Number

EP 15 30 6049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WU Y ET AL: "CE1: SVC study on inter-layer prediction: bit-depth scalability", 25. JVT MEETING; 82. MPEG MEETING; 21-10-2007 - 26-10-2007; SHENZHEN,CN; (JOINT VIDEO TEAM OF ISO/IEC JTC1/SC29/WG11 AND ITU-T SG.16 ),, no. JVT-Y081, 21 October 2007 (2007-10-21), XP030007285, ISSN: 0000-0137 * page 2 first paragraph * | 1-14 | INV. H04N19/11 H04N19/157 H04N19/176 H04N19/593 |
| Y | WINKEN M ET AL: "CE2: SVC bit-depth scalability", 24. JVT MEETING; 81. MPEG MEETING; 29-6-2007 - 5-7-2007; GENEVA, CH;(JOINT VIDEO TEAM OF ISO/IEC JTC1/SC29/WG11 AND ITU-T SG.16 ),, no. JVT-X057, 4 July 2007 (2007-07-04), XP030007164, ISSN: 0000-0082 * figure 1 * | 1-14 | |
| Y | WO 2014/082982 A1 (THOMSON LICENSING) 5 June 2014 (2014-06-05) * page 3, line 14 - line 24 * | 1-14 | TECHNICAL FIELDS SEARCHED (IPC)<br><br>H04N |
| Y | US 2014/140392 A1 (XU JUN [US] ET AL) 22 May 2014 (2014-05-22) * paragraph [0140] - paragraph [0146] * | 2-6,9-13 | |
| A | WO 2014/106746 A1 (CANON KK [JP]; CANON EUROP LTD [GB]) 10 July 2014 (2014-07-10) * page 27, line 20 - line 32 * | 1-14 | |

The present search report has been drawn up for all claims

| Place of search | Date of completion of the search | Examiner |
|---|---|---|
| Munich | 3 December 2015 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6049

This annex lists the patent family members relating to the patent documents cited in  the above-mentioned European search report.
The members are as contained in the European Patent Office EDP file on
The European Patent Office is in no way liable for these particulars which are merely given for the purpose of information.

03-12-2015

| Patent document cited in search report | | Publication date | Patent family member(s) | | Publication date |
|---|---|---|---|---|---|
| WO 2014082982 | A1 | 05-06-2014 | EP | 2926557 A1 | 07-10-2015 |
| | | | US | 2015304656 A1 | 22-10-2015 |
| | | | WO | 2014082982 A1 | 05-06-2014 |
| US 2014140392 | A1 | 22-05-2014 | NONE | | |
| WO 2014106746 | A1 | 10-07-2014 | GB | 2509901 A | 23-07-2014 |
| | | | GB | 2509998 A | 23-07-2014 |
| | | | US | 2015341638 A1 | 26-11-2015 |
| | | | WO | 2014106746 A1 | 10-07-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011002505 A1

- WO 2010018137 A

### Non-patent literature cited in the description

- **M. GRUNDLAND et al.** Non linear multiresolution blending. *Machine Graphis & vision International Journal,* February 2006, vol. 15 (3
- **ZHE WENDY WANG ; JIEFU ZHAI ; TAO ZHANG ; LLACH, JOAN.** Interactive tone mapping for High Dynamic Range video. *ICASSP,* 2010
- **PETER J. ; BURT EDWARD H. ADELSON.** The Laplacian Pyramid as a compact image code. *IEEE Transactions on Communications,* April 1983, vol. COM-31 (4
- **BURT P.J.** The Pyramid as Structure for Efficient Computation. Multiresolution Image Processing and Analysis. Springer-Verlag, 6-35
- **B. BROSS ; W.J. HAN ; G. J. SULLIVAN ; J.R. OHM ; T. WIEGAND.** High Efficiency Video Coding (HEVC) text specification draft 9. *JCTVC-K1003,* October 2012